# EUROPEAN PATENT SPECIFICATION

(11) **EP 0 832 363 B1**
(45) Date of publication and mention of the grant of the patent: **15.12.1999**
(21) Application number: 96912329.8
(22) Date of filing: 03.05.1996
(51) Int. Cl.: F16B 35/04, F16B 5/02

(54) **THREAD SCREW**
GEWINDEBOLZEN
VIS FILETEE

(30) Priority: 03.05.1995 NL 1000293
(43) Date of publication of application: 01.04.1998
(73) Proprietor: Nedschroef Holding N.V., 5700 AA Helmond (NL)
(72) Inventor: KERSTEN, Ferdinand, NL-5422 AS Gemert (NL)
(74) Representative: Ferguson, Alexander
(86) International application number: NL9600192
(87) International publication number: WO9635058

(56) References cited:
- EP-A- 0 128 077
- US-A- 2 167 910
- US-A- 4 952 110
- US-A- 5 073 073

## Description

The invention relates to a thread screw as described in the preamble of claim 1.

A similar thread screw is known from the American patent 4.952.110. This thread screw is provided with an eccentric tip with a smooth portion and a threaded portion, located opposite to each other. The threaded portion of the eccentric tip is located on the surfaces that are substantially aligned with the threaded surfaces of the shank of the thread screw. The smooth surfaces are located at the areas of the tip that are radially inwardly shifted with respect to the threaded surfaces of the shank.

In the known thread screw, the eccentric arrangement of the tip also provides a means for axial alignment of the central axis of the thread screw and the central axis of the nut or tapped hole. The threaded side of the tip helps to prevent an inclined position ("cross-threads") of the thread screw.

Cross-threading occurs when a thread screw, especially in the automobile industry, does not precisely, or with a deviation of more than 5° with respect to the perpendicular direction of insertion, fit in a nut or tapped hole. Such a form of cross-threading is also called angular deviation.

From the American patent 4.981.406 a thread screw is known with a threaded shank and a tip that may be threaded on one side and may be smooth on the other side, possibly with inwardly shifted areas, and the central axis of which is at an angle with or parallel, yet staggered, to the central axis of the shank.

From the European patent application 0.475.712 thread screw is known with a threaded shank and with a tip, the surface of which, on one side, forms a continuation of the thread of the shank and, on the other side, is smooth and is tapered in distal direction.

All the cited, known thread screws have the disadvantage that, although they provide a certain degree of alignment, the threaded portion on the tip results in a destruction of the thread of the nut or tapped hole when the insertion position of the thread screw is too oblique. It has here to be kept in mind that, especially in the automobile industry, robots are used to screw the thread screws in the appropriate holes with a predetermined turning moment. This means that, independent of the situation the thread screw that is to be screwed in encounters, the thread screw is rotated in until the required tightening moment, which, if the thread has an incorrect position with respect to the screw hole, may result in an unacceptable degree of deformation of either of the threads when they interact. The connection in question will then not be as it should be, as a result of which, after this has been ascertained, the connection will either have to be repaired, causing loss of time, or a certain degree of danger will have been created for the period during which the end product, particularly a motor-car, is used.

Other known thread screws have a tip that is provided with a circumferential thread that forms a continuation of the thread of the shank, yet wherein the tip is centrically tapered. Such thread screws are not given preference because a tip like that is difficult to manufacture, while, in addition, the effect with respect to the realization of the alignment of the central axis of nut or tapped hole and thread screw is very limited.

Another known thread screw has a threaded shank that is provided with a truncated conically shaped, centric, smooth head, in which a circular cylinder portion is provided between the smooth head and the shank, which circular cylinder portion is also smooth and has a diameter that is smaller than the inner diameter of the thread on the shank. The aligning function of this screw, too, leaves much to be desired.

Another, similar thread screw has a truncated conically shaped, centric, smooth head with a convex generatrix and, in proximal direction, connecting smooth, circular cylinder- shaped surfaces, the diameter of which substantially corresponds to to inner diameter of the threaded shank.

In the motor-car industry, in particular, it is becoming more and more difficult to attune the parts that have to be assembled in such a way that they precisely coincide at their several points of attachment. It may occur that certain parts have to be fastened to one another at as many as five or six places with the aid of thread screw connections. If the high cost involved with accurate attuning, and, consequently, a minimizing of the tolerances, is to be avoided, measures will have to be taken with which deviations can be levelled out. Nowadays, for this purpose nut plates (swimming nuts) are used that are located on a plate member that has to be fastened, with their screw hole behind the relatively large hole of that one plate that has to be fastened. In accordance with the dimensions of the slotted hole, said nut plates have a freedom of movement that is limited by retainers welded to that one plate that has to be fastened. Owing to the necessary freedom of position of said nut plates, these will often not be in alignment with the fastening holes of the other part/plate that has to be fastened.

It is now an object of the invention to provide a thread screw of the kind indicated in the preamble, with which, even under the above circumstances, alignment can be guaranteed, and cross-threading is prevented in addition, and which therefore has a practically maximum capacity to align the central axes of holes and thread screw, as well as an optimal capacity for correcting oblique positions of insertion of the thread screw. To this purpose, the thread screw according to the invention is characterized by features described in the characterizing portion of claim 1. As a result, the thread screw according to the invention, owing to the eccentric location of the tip, possesses a great capacity for alignment, without there being a chance that the thread screw will be damaged when in an oblique position. The alignment procedure will then not be disturbed by a thread. The capacity for alignment is increased, while, when the thread screw is being screwed in, the function of the smooth tip of opposing an oblique position, is smoothly taken over by the cylindrical smooth surfaces that, in proximal direction, lie there behind. As a result, even in cases of large deviations in size, the threads only mesh when the thread screw is in an at least substantially perpendicular position to the screw hole, and the robot that tightens the thread screw can screw in with the set torque without running the risk of deformation or destruction of the thread.

US-A-5.073.073 discloses a thread screw having a smooth distal end comprising a right-circular cylindrical distal portion located offset with respect to the shank central axis and a truncated portion located between said distal portion and the threaded shank.

The second distal portion preferably has a diameter that corresponds to the inner diameter of the groove of the thread on the shank. Because of this, cross-threading will be practically impossible. It is to be understood that the stated measurement includes the usual manufacturing tolerances.

The outermost distal end is preferably entirely located on one side of the central axis of the shank. This causes the alignment function of the thread screw according to the invention to be maximized. This is enhanced even more when the eccentricity of the outermost distal end is equal to at least one fourth of the diameter of the shank.

The first di.stal portion preferably has, at least on one side, surfaces of which the generatrix coincides with the generatrix of surfaces of the thread screw lying in front of them in proximal direction. This guarantees a smooth transition.

The first distal portion is furthermore preferebly provided with surfaces of which the generatrix (viewed in longitudinal section) has a concave course. Because of this, not only is the alignment function enhanced, but the function of correcting oblique positions as well.

The invention will now be further elucidated with the aid of the exemplary embodiment depicted in the enclosed drawing. The following is shown:
Figure 1 shows a thread screw according to the invention, viewed from the side;
Figure 2 shows the thread screw of figure 1, viewed from the distal end;
Figure 3 shows the thread screw of figures 1 and 2 while it is being screwed into a nut in an unforeseen oblique position, in which the holes of the parts that are to be fastened are not in alignment with one another:
Figure 4 shows the thread screw of figure 1 in the fastening stage, following the stage depicted in figure 3; and
Figure 5 shows the thread screw in the phase in which the threads are meshed.

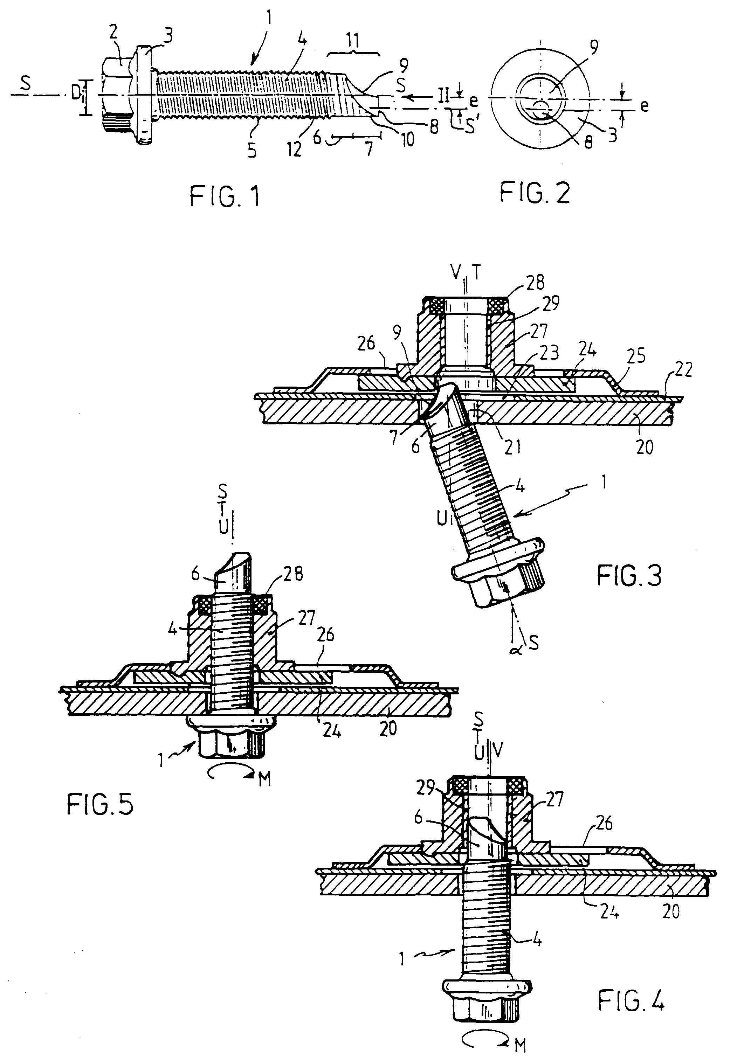

In figure 1 the thread screw is depicted that is provided with a hexagonal head 2, a stop flange 3, a shank 4 that is provided with a thread 5, and a distal end 11 that comprises a first distal portion 7 and a second distal portion 6 and a transverse distal end surface 8. The second distal portion 6 is right-circular cylindrically shaped and smooth and, in distal direction, smoothly passes over into the first distal portion 7, which, as seen on the drawing, at its lower side forms a straight continuation of the second distal portion 6, yet forms concave surfaces 9 in the areas lying thereabove. The circular end surface 8 is located on one side of the central axis S-S of the shank 4, as a result of which the eccentricity e amounts to at least 1/4 Di (the inner diameter of the thread).

In the thread portion 5 the shank 4 is provided with a notch 12 that is intended to accommodate welding or paint residue that has remained behind in the thread of the nut or tapped hole. In this way this residue can have no detrimental effect on the insertion of the thread screw.

The thread screw 1 can be manufactured in a simple way by subsequently cutting off a bar to the exact length, butting the head, forming the tip by means of machining, and rolling the thread. When doing so, the eccentricity can be increased to a maximum, until at least almost 1/2 Dᵢ, in which case a sharp tip is obtained. The diameter of the second distal portion 6 is then, within the manufacturing tolerances, equal to Dᵢ of the thread of the shank 4. Such a thread screw has optimal alignment and cross-threading functions. During insertion, the smooth, eccentric tip seeks for the consecutive fastening holes and the nut or tapped hole and, during rotation, provides alignment, and the smooth cylinder housing provides an, at least approximately, straight position of the shank, in which cross-threading is prevented and the holes are precisely aligned. The lengths of the first and second distal portion will here be adapted to the thickness of the parts that have to be fastened.

In figure 3 the thread screw 1 is depicted during the beginning of the fastening operation. The thread screw, in cooperation with nut 27, is meant to connect plate 20 (of the chassis beam of a motor car) and plate 22 (of a box profile of a car body) to each other. The nut 27 is of the type "Nylock", and is provided with a nylon locking ring. The nut 27 is welded at its bottom end, as seen on the drawing, to nut plate 24. The nut plate 24 lies on the plate 22 and is limited in its free movement along said plate by the circumferential retainer 25, which is welded to the plate 22 itself.

After having placed the plates 20 and 22 against one another, they will be fastened to one another at several places. As has already been indicated above, at the last fastenings it will easily occur that the fastening holes 21, 23, 29 are not aligned. To this end, instead of a stationary nut or tapped hole, so-called swimming nuts are used, like the depicted nut assembly 27, 24, which is freely slidable within retaining ring 25.

In the situation depicted in figure 3 the central axis U of fixing hole 21 of chassis beam 20 is not aligned with the central axis V of fastening hole 23, which has already been enlarged, of the plate 22 of the box profile of a motor car body, nor with central axis T of the bore 29 of the nut assembly 27, 24.

With the aid of a non-depicted robotarm the thread screw 1 arrives at an angle α of for instance 20° with respect to the central axis U of the fastening hole 21. During insertion the eccentric tip 7, with the preferably concave surface 9, in cooperation with the bore of nut plate 24, possibly during rotation in the direction M of the thread screw 1 and in cooperation with the backwards portion of distal end 11 with the bore 21, brings about displacement of the nut plate, and with that, also of the nut 27 to the left, as seen on the drawing. The farther the first distal portion 7 is displaced into the holes, the more the central axes T and U will be aligned with each other. The smooth second distal portion 6 will then, in cooperation with the limitation of the bore 21 and particularly in cooperation with the consecutive portions of the bore 29, bring about tilting of the thread screw 1 to a position in which the central axis S substantially coincides with central axis U and coincides with central axis T, as depicted in figure 4. Then the thread screw will be practically perfectly positioned with respect to the nut 27 and the thread screw 1 can then be screwed in further by rotation in the direction M until a tight clamping action between thread screw and nut 29 is effectuated and the situation as depicted in figure 5 has been achieved.

## Claims

1. A thread screw (1) with a distal insertion end (11) and a proximal head-end (2) and a threaded shank (4) extending in between, wherein the distal insertion end comprises a first distal portion (7) that comprises the outermost distal end of the distal insertion end, said outermost distal end being eccentrically located with respect to the central axis (5) of the shank, characterized in that the first distal portion (7) defines a circumferencially continuous, smooth, non-threaded surface, in which a second distal portion (6), in proximal direction, connects to said first distal portion (7), said second distal portion (6) defining a circumferentially continuous, smooth, non-threaded, right-circular cylindrical surface, which is located centrically with respect to the central axis (5) of the shank.

2. A thread screw according to claim 1, in which the second distal portion (6) has a diameter that corresponds to the inner diameter of the groove of the thread (5) on the shank (4).

3. A thread screw according to any one of the claims 1 or 2, in which the outermost distal end is entirely located on one side of the central axis (5) of the shank (4).

4. A thread screw according to claim 1, 2 or 3, in which the eccentricity of the outermost distal end is equal to at least one fourth of the diameter of the shank (4).

5. A thread screw according to any one of the previous claims, in which the first distal portion (7) at least at one side thereof, has surface areas (10) of which the generatrix coincides with the generatrix of surfaces of the thread screw (1) lying in front of them in proximal direction.

6. A thread screw according to any one of the previous claims, in which the first distal portion (7) is provided with surfaces (9), the generatrix of which has a concave course.

7. A thread screw according to any one of the previous claims, in which the second distal portion (6) connects to the thread (5) of the shank (4) in proximal direction.

8. A thread screw according to any one of the previous claims, in which the thread (5) of the shank (4), in the area near the second distal portion, is locally interrupted and im which the shank in the same area is provided with a recess (12).

## Patentansprüche

1. Ein Schraubenbolzen (1) mit einem distalen Einfuhrende (11) und einem proximalen Kopfende (2) und einem sich dazwischen erstreckenden, mit Gewinde versehenen Schacht (4), wobei das distale Einfuhrende einen ersten distalen Abschnitt (7) umfaßt, der das äußerste distale Ende des distalen Einfuhrendes umfaßt, welches äußerste distale Ende exzentrisch hinsichtlich der Herzlinie (S) des Schachtes gelegen ist, **dadurch gekennzeichnet**, daß der erste distale Abschnitt (7) eine umlaufende, geschlossene, glatte Oberfläche ohne Gewinde bestimmt, wobei ein zweiter distaler Abschnitt (6), der in proximaler Richtung an dem ersten distalen Abschnitt (7) anschließt, welcher zweite distale Abschnitt (6) eine umlaufende, geschlossene, glatte, rechts-kreisförmige zylindrische Oberfläche ohne Gewinde, die zentral hinsichtlich der Herzlinie (S) des Schachtes gelegen ist, bestimmt.

2. Ein Schraubenbolzen gemäß Anspruch 1, wobei der zweite distale Abschnitt (6) einen Durchmesser hat, der dem inneren Durchmesser der Gewinderille (5) auf dem Schacht (4) entspricht.

3. Ein Schraubenbolzen gemäß einem der Ansprüche 1 oder 2, wobei das äußerste distale Ende sich ganz an einer Seite der Herzlinie (S) des Schachtes (4) befindet.

4. Ein Schraubenbolzen gemäß Anspruch 1, 2 oder 3, wobei die Exzentrizität von dem äußersten distalen Ende gleich ist an mindestens einem Viertel des Durchmessers des Schachtes (4).

5. Ein Schraubenbolzen gemäß einem der vorhergehenden Ansprüche, wobei der erste distale Abschnitt (7), zumindest an einer Seite Oberflächen (10) hat, wovon die Generatrix mit der Generatrix von in proximaler Richtung davor gelegenen Oberflächen des Schraubenbolzens (1) zusammenfällt.

6. Ein Schraubenbolzen gemäß einem der vorhergehenden Ansprüche, wobei der erste distale Abschnitt (7) mit Oberflächen (9) versehen ist, wovon die Generatrix einen konkaven Verlauf hat.

7. Ein Schraubenbolzen gemäß einem der vorhergehenden Ansprüche, wobei der zweite distale Abschnitt (6) in proximaler Richtung auf das Gewinde (5) des Schachtes (4) anschließt.

8. Ein Schraubenbolzen gemäß einem der vorhergehenden Ansprüche, wobei das Gewinde (5) des Schachtes (4) nahe dem zweiten distalen Abschnitt gelegenen Gebiet örtlich unterbrochen ist und wobei der Schacht in demselben Gebiet mit einer Aussparung (12) versehen ist.

## Revendications

1. Une vis filetée (1) dotée d'une extrémité d'insertion distale (11) et d'une extrémité de tête proximale (2), et d'une tige filetée (4) s'étendant en position intermédiaire, dans laquelle l'extrémité d'insertion distale comprend une première partie distale (7) comprenant l'extrémité distale la plus extérieure de l'extrémité d'insertion distale, ladite extrémité distale la plus extérieure étant placée excentriquement par rapport à l'axe central (5) de la tige, caractérisée en ce que la première partie distale (7) définit une surface non filetée, lisse, circonférentiellement continue, dans laquelle une deuxième partie distale (6), dans la direction proximale, est reliée à ladite première partie distale (7), ladite deuxième partie distale (6) définissant une surface cylindrique circulaire droite, non filetée, lisse, circonférentiellement continue, centrée par rapport à l'axe central (5) de la tige.

2. Une vis filetée selon la revendication 1, dans laquelle la deuxième partie distale (6) a un diamètre correspondant au diamètre intérieur de la gorge du filet (5) sur la tige (4).

3. Une vis filetée selon l'une quelconque des revendications 1 ou 2, dans laquelle l'extrémité distale la plus extérieure est entièrement située sur un côté de l'axe central (5) de la tige (4).

4. Une vis filetée selon la revendication 1, 2 ou 3, dans laquelle l'excentricité de l'extrémité distale la plus extérieure est égale à au moins un quart du diamètre de la tige (4).

5. Une vis filetée selon l'une quelconque des revendications précédentes, dans laquelle la première partie distale (7), au moins sur un côté de celle-ci, a des zones de surface (10) dont la génératrice coïncide avec la génératrice de surfaces de la vis filetée (1) situées à l'avant d'elles en direction proximale.

6. Une vis filetée selon l'une quelconque des revendications précédentes, dans laquelle la première extrémité distale (7) est dotée de surfaces (9), dont la génératrice a une allure concave.

7. Une vis filetée selon l'une quelconque des revendications précédentes, dans laquelle la deuxième partie distale (6) est relieé au filetage (5) de la tige (4) en direction proximale.

8. Une vis filetée selon l'une quelconque des revendications précédentes, dans laquelle le filetage (5) de la tige (4), dans la zone proche de la deuxième partie distale, est interrompu localement et dans laquelle la tige est dotée dans la même zone d'une cavité (12).
